# EUROPEAN PATENT APPLICATION

(11) **EP 2 312 343 A1**
(43) Date of publication of application: **20.04.2011**
(21) Application number: 10187959.1
(22) Date of filing: 18.10.2010
(51) Int. Cl.: G02B 5/02, G02B 5/20, G02B 5/22, G02F 1/1335

(54) **Optical filter for display device and display device having the same**

(30) Priority: 16.10.2009 KR 20090098570
(71) Applicant: Samsung Corning Precision Materials Co., Ltd., Gyeongsangbuk-do 730-735 (KR)
(72) Inventor: Park, Seong Sik, ChungCheongNam-Do 336-841 (KR); Ryoo, Seung Ryong, ChungCheongNam-Do 336-841 (KR); Cho, Eun Young, ChungCheongNam-Do 336-841 (KR)
(74) Representative: Gulde Hengelhaupt Ziebig & Schneider

(57) **Abstract**

An optical filter provided in front of a display panel of a display device includes a background layer and a color shift-reducing pattern formed to a predetermined thickness at the background layer. The color shift-reducing pattern includes a plurality of pattern elements spaced apart from each other. At least two pattern elements of the plurality of pattern elements have different light absorptivities and/or light diffusivities. The at least two pattern elements may contain different amounts of a light-absorbing material that cause the different light-absorptivities and/or different amounts of a light-diffusing material that cause the different light diffusivities. The plurality of pattern elements may form a group of first pattern elements and a group of second pattern elements. Only the group of first pattern elements may contain the light-absorbing material, and only the group of second pattern elements may contain the light-diffusing material. The groups of first and second pattern elements may be arranged alternately.

## Description

### CROSS REFERENCE TO RELATED APPLICATION

The present application claims priority from Korean Patent Application Number 10-2009-0098570 filed on October 16, 2009, the entire contents of which application are incorporated herein for all purposes by this reference.

### BACKGROUND OF THE INVENTION

### Field of the Invention

The present invention relates to an optical filter for a display device and a display device having the same, and more particularly, to an optical filter for a display device having a color shift-reducing pattern and a display device having the same.

### Description of Related Art

In response to the emergence of the advanced information society, components and devices related to photoelectronics have been significantly improved and rapidly disseminated. Among them, image display devices have been widely distributed as TVs, Personal Computer (PC) monitors, and the like. Moreover, attempts are underway to simultaneously increase the size and reduce the thickness of such display devices.

A Liquid Crystal Display (LCD) is one type of flat panel display, and displays images using liquid crystals. The LCD is widely used throughout the industry since it has the advantages of light weight, low driving voltage, and low power consumption compared to other display devices.

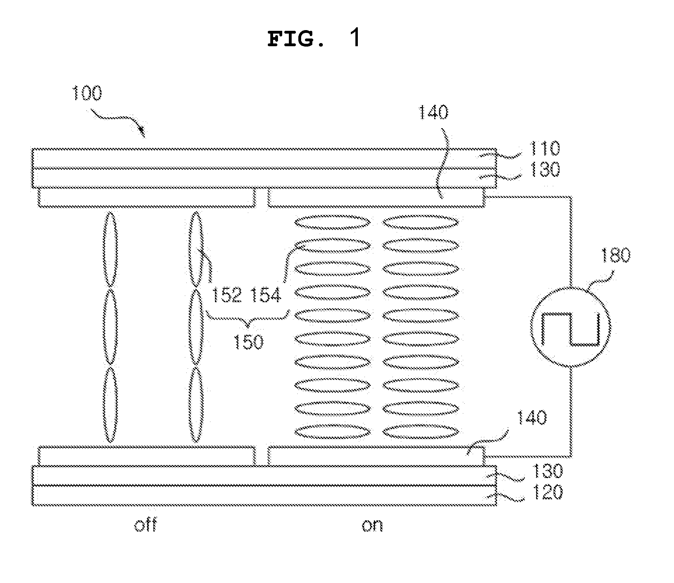

FIG. 1 is a conceptual view schematically showing the basic structure and operating principle of an LCD 100.

With reference by way of example to a conventional Vertical Alignment (VA) LCD, two polarizer films 110 and 120 are arranged such that their optical axes are oriented perpendicular to each other. Liquid crystal molecules 150 having birefringence characteristics are interposed and arranged between two transparent substrates 130, which are coated with transparent electrodes 140. When an electric field is applied from a power supply unit 180, the liquid crystal molecules move and are aligned perpendicular to the electric field.

Light emitted from a backlight unit is linearly polarized after passing through the first polarizer film 120. As shown in the left of FIG. 1, the liquid crystals remain perpendicular to the substrates when no power is applied. As a result, the light, which is in a linearly polarized state, is blocked by the second polarizer film 110, the optical axis of which is perpendicular to that of the first polarizer film 120.

In the meantime, as shown in the right of FIG. 1, when power is on, the electric field causes the liquid crystal to shift to a horizontal alignment parallel to the substrates, between the two orthogonally oriented polarizer films 110 and 120. Thus, the linearly polarized light from the first polarizer film is converted into another linearly polarized light of which the polarization is rotated by 90°, circularly polarized light, or elliptically polarized light while passing through the liquid crystal molecules before it reaches the second polarizer film. The converted light is then able to pass through the second polarizer film. It is possible to gradually change the orientation of the liquid crystal from the vertical orientation to the horizontal orientation by adjusting the intensity of the electric field, thereby allowing control of the intensity of light emission.

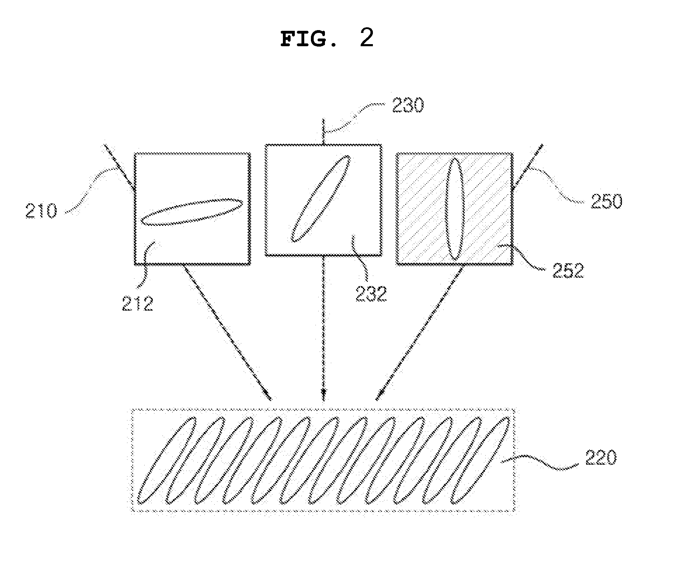

FIG. 2 is a conceptual view showing the orientation and optical transmittance of liquid crystals depending on the watching angle.

When liquid crystal molecules are aligned in a predetermined direction in a pixel 220, the orientation of the liquid crystal molecules looks different depending on the watching angle.

When viewed from the front left (210), the liquid crystal molecules look as if they are substantially aligned along the horizontal orientation 212, and thus the screen looks relatively brighter. When viewed from the front along the line 230, the liquid crystal molecules are seen to be aligned along the orientation 232, which is the same as the actual orientation of the liquid crystal molecules inside the pixel 220. In addition, when viewed from the front right (250), the liquid crystal molecules look as if they are substantially aligned along the vertical orientation 252, and thus the screen looks somewhat darker.

Accordingly, the viewing angle of the LCD is greatly limited compared to other displays that intrinsically emit light, since the intensity and color of light of the LCD varies depending on the watching angle. With the aim of increasing the viewing angle, a large amount of research has been carried out.

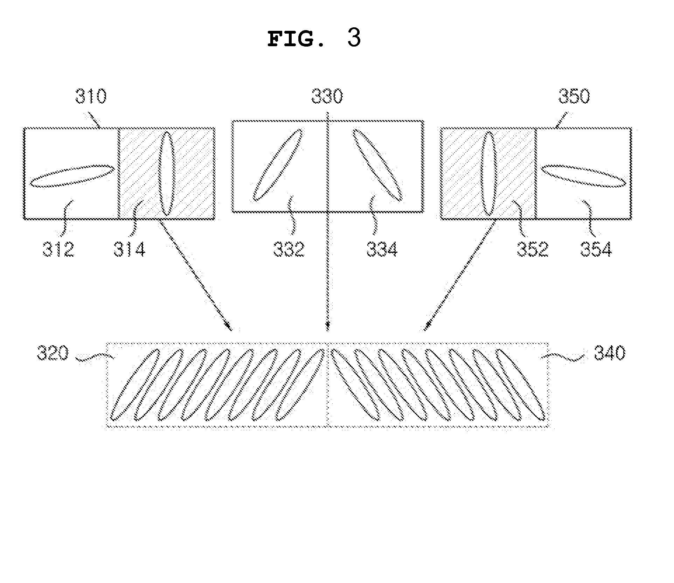

FIG. 3 is a conceptual view showing a conventional attempt to reduce variation in the contrast ratio and color shift depending on the watching angle.

Referring to FIG. 3, a pixel is divided into two pixel parts, that is, first and second pixel parts 320 and 340, in which the orientations of liquid crystals in the two pixel parts are symmetrical to each other. Both the liquid crystals oriented as shown in the first pixel part 320 and the liquid crystals oriented as shown in the second pixel part 340 can be seen. The intensity of light reaching the viewer is the total intensity of light from the two pixel parts.

When viewed from the front left (310), liquid crystal molecules in the first pixel part 320 look as if they are aligned along the horizontal orientation 312, and liquid crystal molecules in the second pixel part 320 look as if they are aligned along the vertical orientation 314. Thus, the first pixel part 320 makes the screen look bright. Likewise, when viewed from the front right (350), the liquid crystal molecules in the first pixel part 320 look as if they are aligned along the vertical orientation 352, and the liquid crystal molecules in the second pixel part 340 look as if they are aligned along the horizontal orientation 354. Then, the second pixel part 340 can make the screen look bright. In addition, when viewed from the front, the liquid crystal molecules are seen to be aligned along the orientations 332 and 334, which are the same as the actual orientations of the liquid crystal molecules inside the pixel parts 320 and 340. Accordingly, the brightness of the screen observed by the viewer remains uniform and is symmetrical about the vertical center line of the screen, even when the watching angle changes. This, as a result, makes it possible to reduce variation in the contrast ratio and color shift depending on the watching angle.

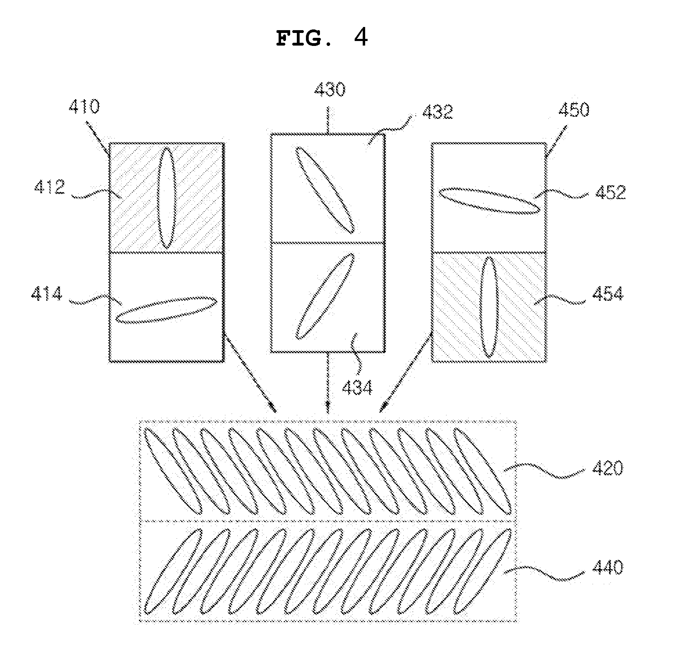

FIG. 4 is a conceptual view showing another conventional approach for reducing variation in the contrast ratio and color shift depending on the watching angle.

Referring to FIG. 4, an optical film 420 having birefringence characteristics is added. The birefringence characteristics of the optical film 420 are the same as those of liquid crystal molecules inside a pixel 440 of an LCD panel, and the orientation thereof are symmetrical with the orientation of the liquid crystal molecules. Because of the orientation of the liquid crystal molecules inside the pixel 440 and the birefringence characteristics of the optical film, the intensity of light reaching the viewer is the total intensity of light passing through the pixel 440 and the optical film 420.

Specifically, when viewed from the front left (410), the liquid crystal molecules inside the pixel 440 look as if they are aligned along the horizontal orientation 414, and the imaginary liquid crystals of the optical film 420 look as if they are aligned along the vertical orientation 412. The resultant intensity of light is the total intensity of light passing through the pixel 440 and the optical film 420. Likewise, when viewed from the front right (450), the liquid crystal molecules inside the pixel 440 look as if they are aligned along the vertical orientation 454 and the imaginary liquid crystals of the optical film 420 look as if they are aligned along the horizontal orientation 452. The resultant intensity of light is the total intensity of light passing through the pixel 440 and the optical film 420. In addition, when viewed from the front, the liquid crystal molecules are seen to be aligned along the orientations 434 and 432, which are the same as the actual orientation of the liquid crystal molecules inside the pixel 440 and the orientation of the optical film 420, respectively.

However, even if the approaches shown in FIGS. 3 and 4 are applied, there remains the problem as shown in FIG. 5. That is, a color shift still occurs depending on the watching angle, and the color changes as the watching angle increases.

The information disclosed in this Background of the Invention section is only for the enhancement of understanding of the background of the invention, and should not be taken as an acknowledgment or any form of suggestion that this information forms a prior art that would already be known to a person skilled in the art.

### BRIEF SUMMARY OF THE INVENTION

Various aspects of the present invention provide an optical filter for a display device that can mitigate color shift according to an increase in a watching angle and a display device having the same.

In an aspect of the present invention, the optical filter provided in front of a display panel of a display device includes a background layer and a color shift-reducing pattern formed to a predetermined thickness at the background layer. The color shift-reducing pattern includes a plurality of pattern elements spaced apart from each other. At least two pattern elements of the plurality of pattern elements have different light absorptivities and/or light diffusivities.

The at least two pattern elements may contain different amounts of a light-absorbing material that cause the different light-absorptivities and/or different amounts of a light-diffusing material that cause the different light diffusivities.

The plurality of pattern elements may form a group of first pattern elements and a group of second pattern elements. Only the group of first pattern elements may contain the light-absorbing material, and only the group of second pattern elements may contain the light-diffusing material.

The group of first pattern elements and the group of second pattern elements may be arranged alternately.

The light-absorbing material may include a green wavelength-absorbing material that absorbs light having green wavelengths from 510nm to 560nm. The light-absorbing material may further include a cyan wavelength-absorbing material that absorbs light having cyan wavelengths from 480nm to 510nm and an orange wavelength-absorbing material that absorbs light having orange wavelengths from 570nm to 600nm.

The light-absorbing material may include a black material, such as carbon black.

The light-diffusing material may include light-diffusing beads.

Also provided is a method of fabricating the above-described optical filter, in which the plurality of pattern elements form the group of first pattern elements and the group of second pattern elements. The method includes a first step of forming the group of first pattern elements at the background layer; a second step of forming recesses at the background layer; a third step of injecting an ultraviolet curing resin together with at least one of the light-absorbing material and the light-diffusing material into the recesses; and a fourth step of curing the ultraviolet curing resin in the recesses by irradiating with ultraviolet rays.

Embodiments of the invention minimize color shift according to an increase in a watching angle, thereby ensuring that a display device has a wide viewing angle and improved image quality.

The methods and apparatuses of the present invention have other features and advantages which will be apparent from, or are set forth in more detail in the accompanying drawings, which are incorporated herein, and in the following Detailed Description of the Invention, which together serve to explain certain principles of the present invention.

### BRIEF DESCRIPTION OF THE DRAWINGS

FIG. 1 is a conceptual view schematically showing the basic structure and operating principle of an LCD;

FIG. 2 is a conceptual view showing the orientation and optical transmittance of liquid crystals depending on the watching angle;

FIG. 3 is a conceptual view showing a conventional attempt to reduce variation in the contrast ratio and color shift depending on the watching angle;

FIG. 4 is a conceptual view showing another conventional attempt to reduce variation in the contrast ratio and color shift depending on the watching angle;

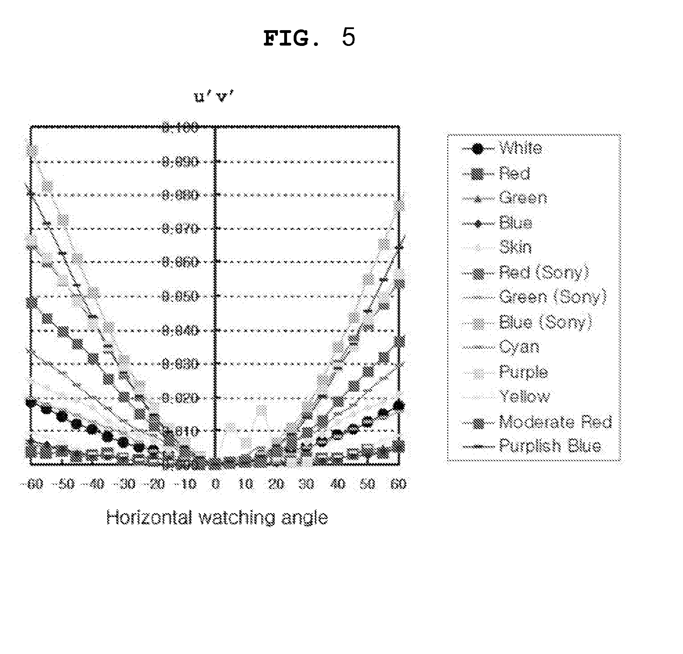

FIG. 5 is a graph showing color shifts depending on watching angles in an LCD on which an optical filter of the invention is not mounted;

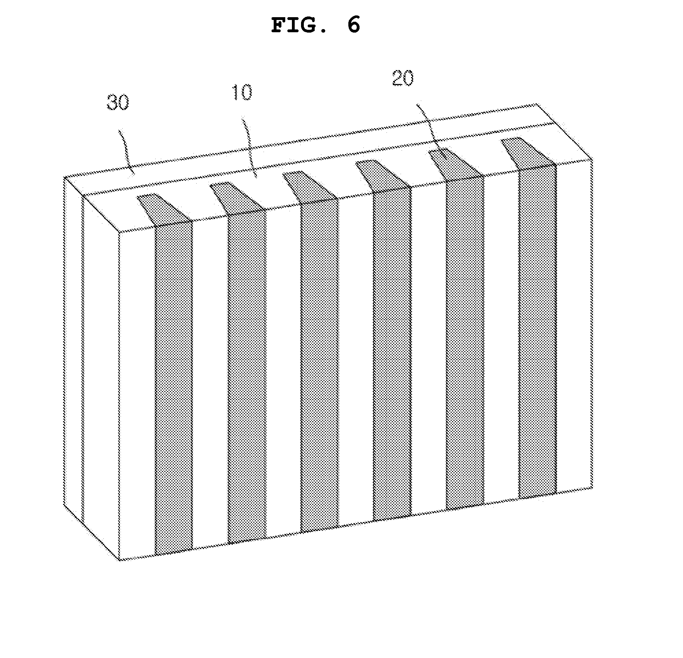

FIG. 6 is a perspective view showing an optical filter according to a comparative embodiment of the invention;

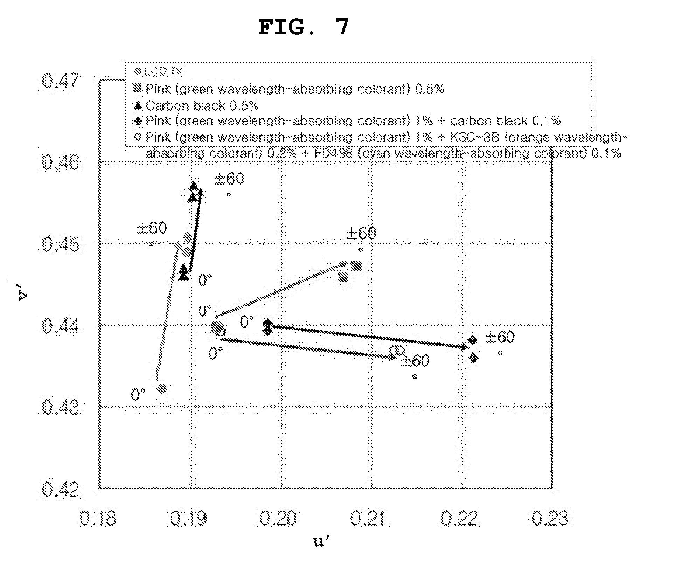

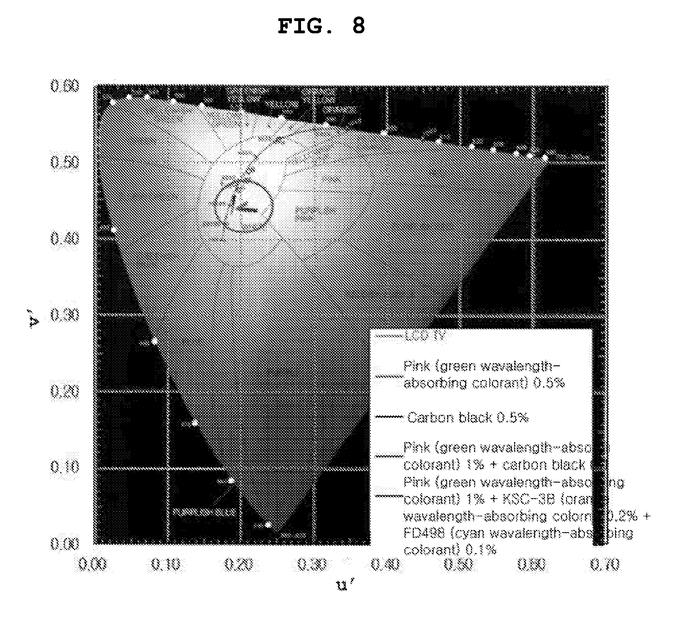

FIGS. 7 and 8 are reference views for explaining light-absorbing materials;

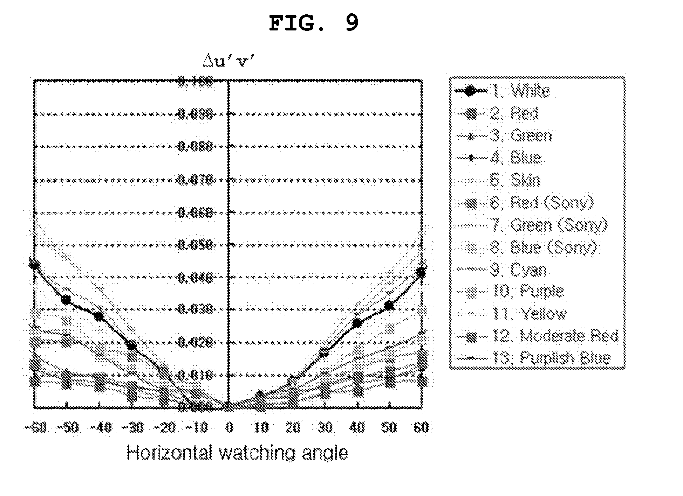

FIG. 9 is a graph showing color shifts in an LCD on which the optical filter shown in FIG. 6 is mounted;

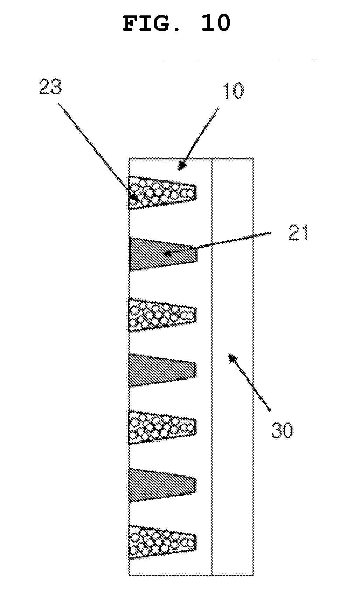

FIG. 10 is a cross-sectional view showing an optical filter according to a first exemplary embodiment of the invention;

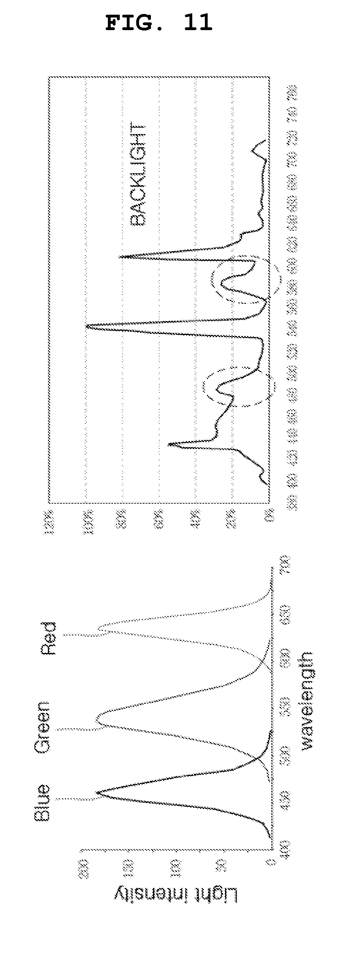

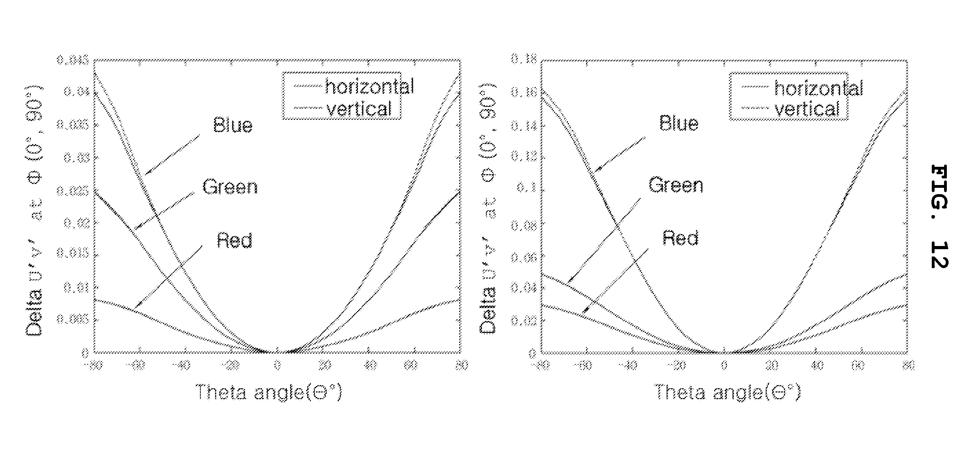

FIGS. 11 and 12 are reference views for explaining cyan wavelength-absorbing materials and orange wavelength-absorbing materials;

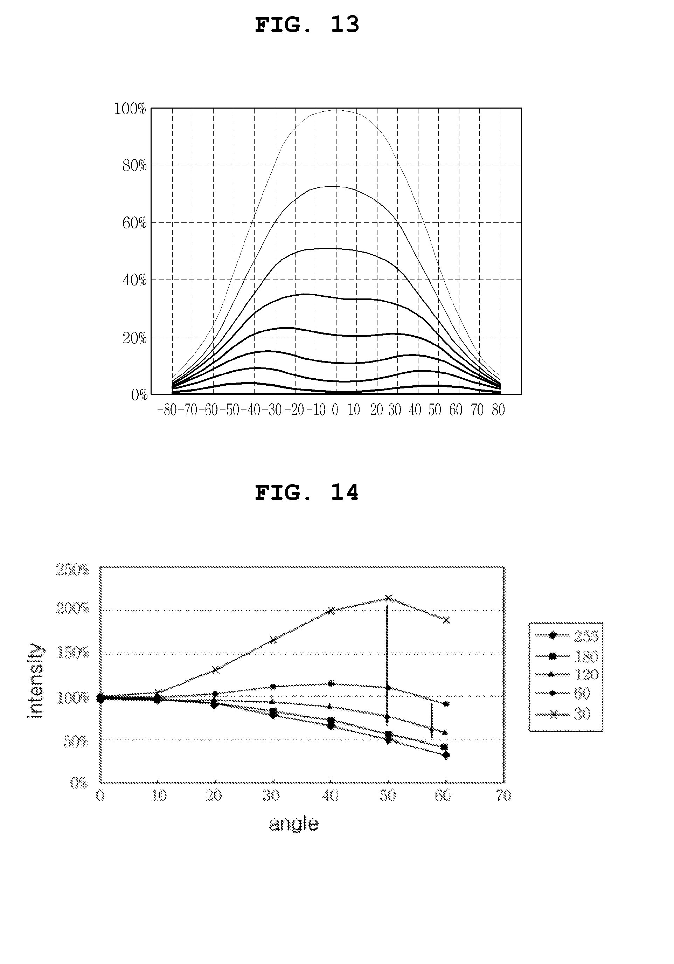

FIGS. 13 and 14 are reference views for explaining black materials;

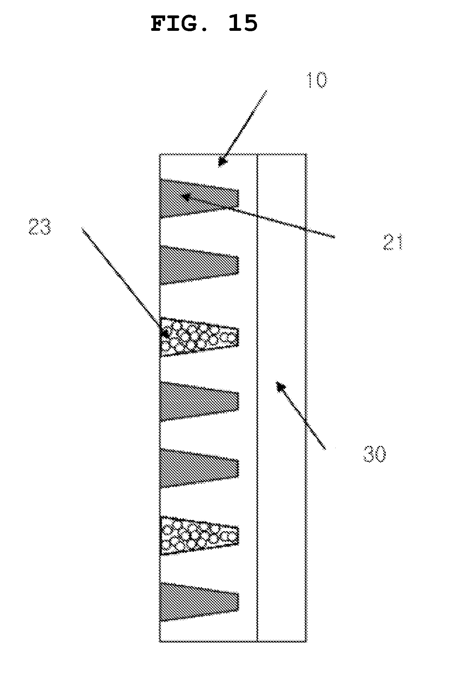

FIG. 15 is a cross-sectional view showing an optical filter according to a second exemplary embodiment of the invention; and

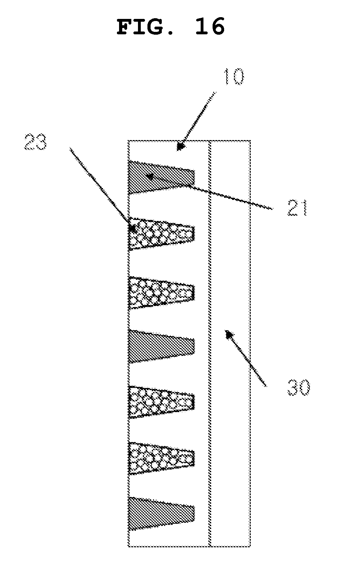

FIG. 16 is a cross-sectional view showing an optical filter according to a third exemplary embodiment of the invention.

### DETAILED DESCRIPTION OF THE INVENTION

Reference will now be made in detail to various embodiments of the present invention, examples of which are illustrated in the accompanying drawings and described below. While the invention will be described in conjunction with exemplary embodiments, it will be understood that the present description is not intended to limit the invention to those exemplary embodiments. On the contrary, the invention is intended to cover not only the exemplary embodiments, but also various alternatives, modifications, equivalents and other embodiments that may be included within the spirit and scope of the invention as defined by the appended claims.

### Comparative Embodiment

FIG. 6 is a perspective view showing an optical filter according to a comparative embodiment of the invention.

As shown in the figure, the optical filter of FIG. 6 includes a background layer 10 and a color shift-reducing pattern 20.

The color shift-reducing pattern 20 contains a light-absorbing material. The light-absorbing material includes a green wavelength-absorbing material, which absorbs light having green wavelengths in the range from 510nm to 560nm. The light-absorbing material may also include a cyan wavelength-absorbing material, which absorbs light having cyan wavelengths in the range from 480nm to 510nm, and an orange wavelength-absorbing material, which absorbs light having orange wavelengths in the range from 570nm to 600nm. In addition, the light-absorbing material may also include a black material, such as carbon black.

FIGS. 7 and 8 are reference views for explaining light-absorbing materials.

Various optical filters having the color shift-reducing pattern containing a green wavelength-absorbing material or the like, were mounted in an LCD TV. Then, color coordinates of a full white screen when watching the screen from the front and at a watching angle of 60° were measured and compared.

When the green wavelength-absorbing material is contained in the color shift-reducing pattern 20 having a wedge-shaped cross section, the color of the green wavelength-absorbing material is exhibited stronger according to an increase in the watching angle, so that color coordinates shift toward the pink area in a CIE 1976 u'v' UCS color space. In addition, when i) the carbon black or ii) the cyan wavelength-absorbing material and the orange wavelength-absorbing material are contained together with the green wavelength-absorbing material in the color shift-reducing pattern 20, the color coordinates shift toward the purplish pink area in the u'v' color space.

In the u'v' color space, it is preferred that the value of Δv' / Δu', i.e. (v'₆₀ - v'₀) / (u'₆₀ - u'₀) , exists in the range from tan(-15°) to tan(45°). (Here, u'₀, v'₀ are color coordinate values measured at a watching angle of 0°, and u'₆₀ and v'₆₀ are color coordinate values measured at a watching angle of 60°.)

Specifically, when only the green wavelength-absorbing material is contained in the color shift-reducing pattern 20, it is preferred that the slope of the change in color coordinates at a watching angle of 60° with respect to the front in the u'v' color space exists in the range from 15° to 45°. When both the green wavelength-absorbing material and the carbon black are contained, it is preferred that the slope of the change in color coordinates at a watching angle of 60° with respect to the front exists in the range from -15° to 15°. In addition, when the green wavelength-absorbing material, the cyan wavelength-absorbing material, and the orange wavelength-absorbing material are contained, it is preferred that the slope of the change in color coordinates at a watching angle of 60° with respect to the front exists in the range from - 15° to 15°.

FIG. 9 is a graph showing color shifts of 13 colors in an LCD TV in which the optical filter shown in FIG. 6 is mounted.

Color shift results as shown in FIG. 9 were obtained by fabricating an optical filter by containing 0.5wt% green wavelength-absorbing material (e.g., pink colorant) in the color shift-reducing pattern 20 shown in FIG. 6.

### Embodiments of the Invention

FIG. 10 is a cross-sectional view showing an optical filter according to a first exemplary embodiment of the invention.

The optical filter of this embodiment is provided in front of a display panel of a display device.

The optical filter includes a background layer 10 and a color shift-reducing pattern.

The background layer 10 is made in the form of layer of a light-transmitting material. The background layer 10 can be made of an Ultraviolet (UV) curing resin.

The color shift-reducing pattern is formed to a predetermined thickness at the background layer 10.

The color shift-reducing pattern can be one selected from among stripes having a wedge-shaped cross section, waves having a wedge-shaped cross section, a matrix having a wedge-shaped cross section, a honeycomb having a wedge-shaped cross section, stripes having a quadrangular cross section, waves having a quadrangular cross section, a matrix having a quadrangular cross section, or a honeycomb having a quadrangular cross section.

In addition, the stripe pattern can be arranged for example, in various ways, such as in horizontal stripes, in vertical stripes, or the like. A horizontal stripe pattern is effective in compensating for an increase in the vertical watching angle, whereas a vertical pattern is effective in compensating for an increase in the horizontal watching angle.

In addition, it is possible to effectively prevent a moiré phenomenon by arranging the pattern in such a manner that it has a predetermined bias angle with respect to the horizontal or vertical direction.

The color shift-reducing pattern can be formed such that the bottom surface thereof is oriented toward a viewer or toward the display panel. It is also possible that the color shift-reducing patterns are formed on both surfaces of the background layer 1.

Although FIG. 10 shows an embodiment in which the color shift-reducing pattern is formed as an engraving with respect to the background layer 10, the present invention is not limited thereto. That is, the color shift-reducing pattern can be formed as an embossing with respect to the background layer 10.

The color shift-reducing pattern includes a plurality of pattern elements, which are spaced apart from each other. Here, at least two pattern elements have different light absorptivities and/or light diffusivities.

For this, the at least two pattern elements can include different light-absorbing materials and/or light-diffusing materials. In one example, it is possible to cause different light absorptivities by adding different types of light-absorbing materials.

In another example, the at least two pattern elements can include different amounts of the light-absorbing materials and/or light-diffusing materials. Here, these amounts may include an amount of 0.

Below, a more detailed description will be given. By way of example, let's think about an embodiment in which the plurality of pattern elements is grouped such that it includes a group of first pattern elements and a group of second pattern elements. In this embodiment, a variety of modifications can be made. For example, it is possible that i) the group of first pattern elements 21 contains the light-absorbing material and the group of second pattern elements 23 contains the light-diffusing material, as shown in FIG. 10, ii) the group of first pattern elements 21 contains both the light-absorbing material and the light-diffusing material and the group of second pattern elements 23 contains one of the light-absorbing material and the light-diffusing material, or iii) both the groups of first and second pattern elements 21 and 23 contain both the light-absorbing material and the light-diffusing material.

The groups of pattern elements can have a variety of arrangements, and, for example, can be arranged in a regular sequence. FIG. 10 shows an exemplary embodiment in which the group of first pattern elements 21 and the group of second pattern elements 23 are alternately arranged.

The color shift-reducing pattern can contain i) the green wavelength-absorbing material, ii) the cyan wavelength-absorbing material and the orange wavelength-absorbing material together with the green wavelength-absorbing material, iii) a black material, such as carbon black, together with the green wavelength-absorbing material, the cyan wavelength-absorbing material, and the orange wavelength-absorbing material, iv) black material, such as carbon black, together with the green wavelength-absorbing material, or v) the black material such as carbon black.

Color shift-reducing pattern containing green wavelength-absorbing material

In the display industry, a display device is typically evaluated by using 13 colors, namely: white, red, blue, green, skin, Sony red, Sony Blue, Sony green, cyan, purple, yellow, moderate red, and purplish blue.

When white light is emitted at a high gray level from a display panel, the luminance of light decreases over the entire wavelength range according to an increase in the watching angle, and particularly decreases most rapidly in the blue wavelength range. However, when light is emitted at a low gray level, the luminance of light increases over the entire wavelength range according to an increase in the watching angle, and particularly increases most rapidly in the green wavelength range.

Therefore, the color shift-reduction pattern gradually increases the absorption of light emitted from the display panel over the entire wavelength range according to an increase in the watching angle and in particular, gradually increases the absorption of light in the green wavelength range from 510nm to 560nm in a relatively large amount by containing the green wavelength-absorbing material therein. This serves to reduce the difference in a luminance of RGB according to the watching angle and the gray level and thereby minimize the color shift according to an increase in the watching angle.

The green wavelength-absorbing material can be one of inorganic and organic materials that can absorb light having green wavelengths in the range from 510nm to 560nm. It is preferred that pink colorant be used as the green wavelength-absorbing material. In addition to the pink colorant, examples of the green wavelength-absorbing material may include any materials that can absorb light having green wavelengths.

Color shift-reducing pattern containing green wavelength-absorbing material + cyan wavelength-absorbing material + orange wavelength-absorbing material

FIG. 11 is graphs showing the spectra of light emitted from Light-Emitting Diode (LED) and Cold Cathode Fluorescent Light (CCFL) backlights.

As shown in the figure, unlike the LED backlight (seen in the left part of FIG. 11), the CCFL backlight (seen in the right part of FIG. 11) exhibits strong peaks in the cyan wavelength range in the vicinity of 490nm and in the orange wavelength range in the vicinity of 590nm.

Such peaks in the cyan and orange wavelength ranges contribute to a reduction in the range of color reproduction and cause the color shift to deteriorate.

FIG. 12 is graphs showing color shifts depending on the watching angle for the LED and CCFL backlights.

As shown in the figure, referring to the color shift results of LCDs having the LED backlight (see in the left part of FIG. 12) and the CCFL backlight (seen in the right part of the FIG. 12), it can be appreciated that the result of the LCD having the CCFL backlight is inferior.

Accordingly, it is possible to further reduce the color change of the 13 colors according to an increase in the watching angle by more absorbing the peaks of the cyan wavelength range and the orange wavelength range, which would otherwise have a bad effect on color shift according to an increase in the watching angle, as the watching angle increases.

For this function, the color shift-reducing pattern can contain not only the green wavelength-absorbing material, which can absorb light having green wavelengths in the range from 510nm to 560nm, but also the cyan wavelength-absorbing material, which can absorb light having green wavelengths in the range from 480nm to 510nm, and the orange wavelength-absorbing material, which can absorb light having green wavelengths in the range from 570nm to 600n. As a result, when light is emitted from the display panel, the color shift-reducing pattern more absorbs light in the green wavelength range according to an increase in the watching angle. In addition, the color shift-reducing pattern more absorbs peaks in the cyan wavelength range and in the orange wavelength range from the LCD spectrum, as the watching angle increases. This makes it possible to minimize the color changes, in particular, the color changes of the 13 colors including blue-shade colors and red-shade colors, thereby further improving the color shift.

Color shift-reducing pattern containing black material

It is possible to mitigate the color shift by adding a black material, such as carbon black, into the color shift-reducing pattern.

FIGS. 13 and 14 are reference views showing changes in luminance and normalized luminance depending on the watching angle and gray level in a bare LCD.

At a high gray level, the luminance decreases as the watching angle increases. However, as shown in FIGS. 13 and 14, at a low gray level, the increase in the luminance according to an increase in the watching angle causes the color shift to deteriorate. Therefore, it is possible to mitigate the color shift by ensuring that light emitted from the display panel is absorbed more according to an increase in the watching angle, so that luminance decreases according to an increase in the watching angle irrespective of the gray level.

It is preferred that the amount of carbon black be in the range from 0.05wt% to 0.9wt%.

The background layer 10 or a backing layer 30 can contain a color correction material that changes or controls color balance by reducing or adjusting the amounts of red (R), green (G), and blue (B) colors.

When light is emitted in the front direction through the optical filter for a display device, the color shift-reducing pattern may adversely cause the color of a displayed image to change. Therefore, it may be preferred that the background layer 10 or the backing layer 30 contain a color correction colorant that absorbs wavelengths other than the green wavelength range, the orange wavelength range, and the cyan wavelength range. For example, it is possible to correct the color of light emitted in the front direction to be similar to the original color by adding, into the background layer 10 or the backing layer 30, suitable amounts of a green-complementary wavelength-absorbing material such as a red wavelength-absorbing material and a blue wavelength-absorbing material. Since this can be implemented by simply adding the color correction material into the background layer 10 or the backing layer 30 without providing a separate layer or film, it is possible to simplify the structure and fabrication processes of the optical filter.

The color correction material can also be added to an adhesion layer. Moreover, the color correction material can also be added into other functional films.

Since the light-diffusing material uniformly diffuses light emitted from the display panel more according to an increase in the watching angle, it promotes color mixing, thereby mitigating color shift.

The light-diffusing material can be made of light-diffusing particles such as light-diffusing beads.

It is typical that the light-absorbing material and the light-diffusing material are mixed into a transparent polymer resin and then the mixture is added to the color shift-reducing pattern. It is preferred that the refractive index of the light-diffusing particles be greater than that of the polymer resin. An excellent light-diffusing effect can be obtained when the refractive index of the light-diffusing particles is greater by 0.01 or more than that of the polymer resin. It is preferred that the light-diffusing particles be white particles having an average diameter of 0.1µm or more so that they can diffuse light over the entire wavelength range. However, the present invention is not limited thereto.

The light-diffusing particles can have two or more sizes and refractive indices. It is possible to properly control optical characteristics based on the material, refractive index, size, and particle size distribution of the light-diffusing particles.

The light-diffusing particles can include one or more selected from among Polymethylmethacrylate (PMMA), vinyl chloride, acrylic resins, Polycarbonate (PC)-based resins, Polyethylene Terephthalate (PET)-based resins, Polyethylene (PE)-based resins, Polystyrene (PS)-based resins, Polypropylene (PP)-based resins, Polyimide (PI)-based resins, glass, and oxides such as silica TiO₂.

In addition, as shown in FIG. 10, the optical filter can include the backing layer 30, which supports the background layer 10.

It is preferred that the backing layer 30 be a transparent resin film that allows Ultraviolet (UV) rays to pass through. As the material of the backing layer 30, it is possible to use, for example, Polyethylene Terephthalate (PET), Polycarbonate (PC), Polyvinyl Chloride (PVC), or the like.

However, the backing layer can be excluded in some embodiments.

A method of fabricating an optical filter includes the step of applying a UV curing resin on one surface of the backing layer 30, followed by forming recesses on the UV curing resin using a pattern-forming roll. Afterwards, the UV curing resin is irradiated with UV rays. Afterwards, the recesses are filled with a mixture that includes a light-absorbing material, a light-diffusing material, a UV curing resin, and/or the like, and the mixture is then cured by being irradiated with UV rays.

Afterwards, recesses are formed using a laser.

Then, the recesses are filled with a mixture that will form the group of second pattern elements. The mixture includes a light-absorbing material, a light-diffusing material, a UV curing resin, and/or the like.

Afterwards, the UV curing resin is cured by irradiating with UV rays, thereby completing a color shift pattern.

However, the invention is not limited thereto. Alternatively, the recesses of the background layer can be formed using a variety of methods, such as thermal pressing, which uses thermoplastic resin, injection molding, in which thermoplastic resin or thermosetting resin is injected, or the like.

FIG. 15 is a cross-sectional view showing an optical filter according to a second exemplary embodiment of the invention, and FIG. 16 is a cross-sectional view showing an optical filter according to a third exemplary embodiment of the invention.

As shown in the figures, the arrangement of the groups of first and second pattern elements 21 and 23 can have a variety of modifications. FIG. 15 shows an embodiment in which the groups of first and second pattern elements are arranged in a regular pattern, with one second pattern element arranged for every two first pattern elements. FIG. 16 shows an embodiment in which the groups of first and second pattern elements are arranged in a regular pattern, with two second pattern elements arranged for every one first pattern element.

In addition, the group of first pattern elements and the group of second pattern elements can be arranged symmetrically about the center line of the optical filter. For example, a first pattern element, a second pattern element, another second pattern element and still another second pattern element may be sequentially arranged in each of the right and left directions from the center line of the optical filter.

Although FIGS. 10, 15, and 16 depict an embodiment in which the color shift-reducing pattern is composed of two groups of pattern elements for the sake of convenience, three or more groups of pattern elements can of course be provided.

The optical filter for a display device of the invention is disposed in front of the display panel, and can be produced by stacking a variety of functional films, such as a transparent substrate, an antireflection layer, an antiglare layer, an anti-fog layer, or the like on one another.

Although, for the sake of convenience, only the LCD has been described as an example of the display device of the invention, the display device of the invention is not limited thereto. The present invention can be applied to a variety of devices, namely:
large size display devices that reproduce RGB colors, such as a Plasma Display Panel (PDP), an Organic Light-Emitting Diode (OLED),
a Field Emission Display (FED), or the like; small mobile display devices, such as a Personal Digital Assistant (PDA), a display window of a small size game machine, a display window of a mobile phone, or the like; flexible display devices; and the like.

The foregoing descriptions of specific exemplary embodiments of the present invention have been presented for the purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto and their equivalents.

## Claims

1. An optical filter provided in front of a display panel of a display device, comprising:
a background layer; and
a color shift-reducing pattern formed to a predetermined thickness at the background layer,
wherein the color shift-reducing pattern includes a plurality of pattern elements spaced apart from each other,
wherein at least two pattern elements of the plurality of pattern elements have different light absorptivities and/or light diffusivities.

2. The optical filter according to claim 1, wherein the at least two pattern elements contain different light-absorbing materials that cause the different light-absorptivities and/or different light-diffusing materials that cause the different light diffusivities.

3. The optical filter according to claim 1, wherein the at least two pattern elements contain different amounts of a light-absorbing material that cause the different light-absorptivities and/or different amounts of a light-diffusing material that cause the different light diffusivities.

4. The optical filter according to claim 3, wherein the plurality of pattern elements form a group of first pattern elements and a group of second pattern elements,
wherein only the group of first pattern elements contains the light-absorbing material, and only the group of second pattern elements contains the light-diffusing material.

5. The optical filter according to claim 4, wherein the group of first pattern elements and the group of second pattern elements are arranged in a regular sequence.

6. The optical filter according to claim 5, wherein the group of first pattern elements and the group of second pattern elements are arranged alternately.

7. The optical filter according to claim 4, wherein the group of first pattern elements and the group of second pattern elements are arranged symmetrically about the center line of the optical filter.

8. The optical filter according to claim 3, wherein the plurality of pattern elements form a group of first pattern elements and a group of second pattern elements,
wherein the group of first pattern elements contains both the light-absorbing material and the light-diffusing material, and the group of second pattern elements contains only one of the light-absorbing material and the light-diffusing material.

9. The optical filter according to claim 3, wherein the plurality of pattern elements form a group of first pattern elements and a group of second pattern elements,
wherein the group of first pattern elements and the group of second pattern elements contain both the light-absorbing material and the light-diffusing material.

10. The optical filter according to claim 3, wherein the light-absorbing material includes a green wavelength-absorbing material that absorbs light having green wavelengths from 510nm to 560nm.

11. The optical filter according to claim 10, wherein the light-absorbing material further includes a cyan wavelength-absorbing material that absorbs light having cyan wavelengths from 480nm to 510nm and an orange wavelength-absorbing material that absorbs light having orange wavelengths from 570nm to 600nm.

12. The optical filter according to claim 10, wherein the light-absorbing material further includes a black material.

13. The optical filter according to claim 3, wherein the light-absorbing material includes a black material.

14. The optical filter according to claim 13, wherein the black material is carbon black.

15. The optical filter according to claim 3, wherein the light-diffusing material includes light-diffusing beads.

16. The optical filter according to claim 1, wherein the color shift-reducing pattern includes a resin.

17. The optical filter according to claim 1, wherein the color shift-reducing pattern is one selected from the group consisting of stripes having a wedge-shaped cross section, waves having a wedge-shaped cross section, a matrix having a wedge-shaped cross section, a honeycomb having a wedge-shaped cross section, stripes having a quadrangular cross section, waves having a quadrangular cross section, a matrix having a quadrangular cross section, and a honeycomb having a quadrangular cross section.

18. A display device comprising:
a display panel; and
an optical filter provided in front of the display panel, wherein the optical filter comprises:
- a background layer; and
- a color shift-reducing pattern formed to a predetermined thickness at the background layer, wherein the color shift-reducing pattern includes a plurality of pattern elements spaced apart from each other,
wherein at least two pattern elements of the plurality of pattern elements have different light absorptivities and/or light diffusivities.

19. A method of fabricating an optical filter provided in front of a display panel of a display device, wherein the optical filter comprises a background layer and a color shift-reducing pattern formed to a predetermined thickness at the background layer, wherein the color shift-reducing pattern includes a plurality of pattern elements spaced apart from each other, wherein at least two pattern elements of the plurality of pattern elements have different light absorptivities and/or light diffusivities, wherein the at least two pattern elements contain different amounts of a light-absorbing material that cause the different light-absorptivities and/or different amounts of a light-diffusing material that cause the different light diffusivities, and wherein the plurality of pattern elements form a group of first pattern elements and a group of second pattern elements,
the method comprising:
forming the group of first pattern elements at the background layer;
forming recesses at the background layer;
injecting an ultraviolet curing resin together with at least one of the light-absorbing material and the light-diffusing material into the recesses; and
curing the ultraviolet curing resin in the recesses by irradiating with ultraviolet rays.

20. The method according to claim 19, wherein the recesses are formed by irradiating with a laser beam.
